# EUROPÄISCHE PATENTANMELDUNG

(11) **EP 2 599 624 A1**
(43) Veröffentlichungstag der Anmeldung: **05.06.2013**
(21) Anmeldenummer: 11191130.1
(22) Anmeldetag: 29.11.2011
(51) Int. Cl.: B32B 27/08, B32B 27/30, B32B 27/32

(54) **Verbundkörper**

(71) Anmelder: Senoplast Klepsch & Co. GmbH, 5721 Piesendorf (AT)
(72) Erfinder: Scheibner, Gebhard, 76220 Santa Rosa Jauregui (MX); Kappacher, Johann, 5721 Piesendorf (AT); Kukutschka Grajeda, Alejandro, 76060 Colonia, Milenio III, Querétaro (MX)
(74) Vertreter: Schwarz & Partner

(57) **Zusammenfassung**

Verbundkörper, umfassend
(i) optional eine, vorzugsweise transparente, Deckschicht (1), umfassend thermoplastische Acrylpolymere und gegebenenfalls UV Additive,
(ii) Eine darunter liegende eingefärbte zweite Schicht (2), umfassend thermoplastische Acrylpolymere, Farbmittel und gegebenenfalls UV Additiven sowie,
(iii) eine unterhalb der eingefärbten zweiten Schicht (2) angeordnete Haftvermittlerschicht (3), umfassend einen thermoplastischen Werkstoff welcher die eingefärbte zweite Schicht (2) mit der darunter liegenden vierten Schicht (4) haftend verbindet, gegebenenfalls aufweisend UV Additive und/oder Farbmittel,
(iv) eine unter der Haftvermittlerschicht (3) angeordnete vierte Schicht (4), mit einer Schichtstärke von 1 - 50%, bevorzugt 1 - 30% bezogen auf die Dicke des Verbundkörpers, umfassend einen thermoplastischen polyolefinbasierenden Werkstoff, zusätzlich enthaltend Farbmittel, sowie optional UV Additive und Additive, welche die Haftungseigenschaften zur darüber liegenden Haftvermittlerschicht (3) verbessern;
(v) eine unter der vierten Schicht (4) angeordnete Substratschicht (5), umfassend 1- 100 Gew.% anfallender Abfall und den verbleibenden Rest auf 100% einen thermoplastischen polyolefinbasierenden Werkstoff sowie Farbmittel sowie (vi) eine rückseitige Deckschicht (6), umfassend einen thermoplastischen polyolefinbasierenden Werkstoff zusätzlich enthaltend Farbmittel, mit einer Schichtstärke von 1 - 50% bezogen auf die Dicke des Verbundkörpers.

## Beschreibung

Die Erfindung betrifft mehrschichtige Verbundkörper, umfassend thermoplastische Polyolefine und thermoplastische Acryl(co)polymere. Die Erfindung betrifft weiters ein Verfahren zu deren Herstellung, deren Verarbeitung und die Verwendung solcher mehrschichtigen Verbundkörper als Formkörper und die Anwendung dieser Formkörper.

Die Verwendung von flächigen Verbundkörpern im Außeneinsatz stellt hohe Anforderungen an die verwendeten Werkstoffe. Zu den wichtigsten Parametern zählen exemplarisch eine hohe UV- und Witterungsstabilität, eine hohe Kratzfestigkeit, gute Beständigkeit gegen Chemikalien und gute mechanische Eigenschaften auch bei Einfluss von Kälte oder Hitze. Von Vorteil sind dabei Materialien, die - beispielsweise auch mit Effektpigmenten - eingefärbt sind, da eine Lackierung von Bauteilen aufwendig und kostenintensiv ist.

Mehrschichtige thermoplastische Bauteile für den Außeneinsatz sind aus der Literatur bekannt. So beschreibt H. Kappacher in Kunststoffe 86 (1996), S. 388 bis 392 coextrudierte, eingefärbte PMMA/ABS Verbundplatten.

Die DE 197 25 560 A1 beschreibt mehrschichtige Verbundkörper, aufweisend eine Polymethylmethacrylat (PMMA) Deckschicht und eine darunter liegende Substratschicht, gegebenenfalls mit einer Zwischenschicht. Die Substratschicht besteht aus einer Polymerlegierung definierter Zusammensetzung. Die optionale Zwischenschicht setzt sich zusammen aus PMMA, Polycarbonat (PC) oder einer Formmasse, die in der Zusammensetzung analog der in der Substratschicht definierten Polymerlegierung ist. In der DE 197 25 560 A1 wird beschrieben, dass solche Verbundkörper eine gegenüber herkömmlichen ABS- Verbundkörpern verbesserte Wärmeformbeständigkeit aufweisen.

Die EP 0 361 823 B1 beschreibt Folien, welche auf fluorhältigen Polymeren basieren und auch Acrylnitril-Butadien-Styrol-Terpolymer (ABS) enthalten.

Die in den drei oben genannten Dokumenten angeführten Verbundkörper werden im automotiven Bereich eingesetzt und bestehen hauptsächlich aus Styrolcopolymeren (z. B. ABS), Polycarbonat oder Blends davon. Diese Schichtaufbauten werden mit Polymethylmethacrylat oder Polyvinylidenfluorid als Deckschicht coextrudiert oder colaminiert. Verbundkörper dieser Art zeichnen sich durch gute mechanische Eigenschaften im Normaltemperaturbereich aus, weisen aber Mängel bei Temperaturen unter -20° Celsius auf.

Ungeachtet dessen gibt es aber Anwendungen, für welche die mechanischen Eigenschaften der zuvor genannten Verbunde unzureichend sind. Für Verkleidungsteile im Nutzfahrzeugbereich, Baugeräte oder für landwirtschaftliche Geräte aber auch im Kfz-Bereich, zum Beispiel für Stoßfänger, werden erhöhte Eigenschaften an die mechanischen Eigenschaften spezifiziert, sowohl bei Normaltemperaturen als auch im Tieftemperaturbereich bis -40°C. Für Applikationen dieser Art werden daher andere Werkstoffe herangezogen.

Polyolefine haben sich in einigen Bereichen als zweckmäßig erwiesen. Als Werkstoffe für hochglänzende Oberflächen für den Außenbereich sind diese allerdings nicht geeignet: Sie weisen eine sehr weiche Oberfläche auf, sie sind kratzempfindlich und die UV Beständigkeit ist mangelhaft. Außerdem sind sie in der Morphologie teilkristallin, was beim Tiefziehen zu teilweise matten Oberflächen führt.

Es wurde daher nach technischen Lösungen gesucht, um polyolefinbasierende Substrate mit hochglänzenden, UV-stabilen, kratzfesten, chemisch resistenten Oberflächen zu kombinieren. Als Werkstoff für die Deckschicht wurde auch hier PMMA in Betracht gezogen. Bei der Kombination von PMMA mit Polyolefinen musste im ersten Schritt das Problem der Unverträglichkeit beider Werkstoffe zueinander gelöst werden: PMMA haftet als polarer Werkstoff nicht auf unpolaren Polyolefinen. Informationen zur Verträglichkeit von verschiedenen Polymere finden sich in "Einführung in die Kunststoffverarbeitung"; Seite 225; Autor: Walter Michaeli, Hanser Verlag, 5. Auflage oder auch "Kreislaufwirtschaftssystem Altauto"; Seite 249; 1. Auflage; Autor: Frank Wallau, Deutscher Universitätsverlag GmbH. Lösungsansätze um PMMA auf Polyolefinen in flächigen Mehrschichtverbunden zum Haften zu bringen werden nachfolgend beschrieben:
Die US 6,420,050 B2 beschreibt mehrere unterschiedliche Coextrusionsaufbauten mit Deckschichten (A) aus Blends, bestehend aus verschiedenen Prozentsätzen von Polymethacrylatestern oder Polyacrylatestern, welchen Copolymere zugesetzt werden können: Copolymere von vinylaromatischen Monomeren und einem aliphatisch konjugiertem Dien (diese können auch chemisch modifiziert werden) oder Olefin-Acrylat Copolymere bestehend aus Olefin und Acrlyatmonomeren. Darunter befindet sich eine Substratschicht (B) bestehend aus Polypropylen (PP) Homopolymer (auch gefüllt), Polypropylen oder Copolymeren, Polystyrol oder Maleinsäureanhydridcopolymere, Blockcopolymere bestehend aus Styrol und Butadien. Die Stoffe, welche die Substratschicht B bilden, können bis zu 50% Füllstoff enthalten. Die Haftung der Methacrylatdeckschicht auf dem Polyolefin wird durch Zumischen von Verträglichkeitsvermittlern erreicht.

Die US 6,455,171 B2 beschreibt thermoformbare Verbundkörper, umfassend eine Deckschicht (A) aus 50 - 100% von Polymethacrylatestern oder Polyacrylatester, einer Zwischenschicht (C) bestehend aus (C1) Olefin-Acrylatpolymeren oder (C2) Blockcopolymeren von vinylaromatischen mit aliphatischen konjugierten Dienen (auch chemisch modifiziert) und einem Substrat (B). Die Zwischenschicht C kann auch ein Blend von C1 und C2 sein. B besteht aus PP oder Copolymer von Propylen und Ethylen. Die Haftung wird in diesem Fall durch Einführen einer Haftvermittlerschicht erreicht. Die Herstellung der Verbundkörper erfolgt mittels Coextrusion oder Lamination.

Die US 2008/0254308 A1 beschreibt eine Substratschicht aus Polyolefin und eine Haftvermittlerschicht, auf der mindestens eine weitere Schicht bestehend aus (impactmodifiziertem) Polyalkyl(meth)acrylat aufgebracht ist. Diese Deckschicht kann auch UV-Stabilisatoren, Additive und Pigmente enthalten. Die Dicke ist definiert von 0,1 bis 38 mm. Der Schichtaufbau wird durch Coextrusion oder Lamination dargestellt. Auch hier wird eine Haftvermittlerschicht als Zwischenschicht eingeführt. Die Haftvermittlerschicht besteht aus einer Vinylcyanid- und einer Styrolblockcopolymer Komponente.

In der DE 195 47 720 A1 wird ein Verbundwerkstoff, bestehend aus mindestens vier Schichten beschrieben, wobei von einer Polyolefinschicht ausgegangen wird, die aus Abfällen gewonnen wird. Darauf wird eine coronavorbehandelte Polypropylenschicht aufgebracht, auf welche wiederum ein wasserbasierender Primer aufgetragen wird. Auf diese Primerschicht wird eine Kleberschicht appliziert, worauf in Folge eine Dekorfolie, bestehend aus PMMA oder anderen Polymeren, laminiert wird. Es wird auch die Möglichkeit beschrieben, die Kleberschicht auf die Dekorfolie zu applizieren. Auch in diesem Fall erfolgt das Zusammenfügen durch Lamination bzw. Verpressen. Die beschriebenen Verbundwerkstoffe werden also mehrschrittig dargestellt.

Die US 6,652,985 B1 zeigt einen auf Acrylpolymeren basierenden Laminierfilm, der an der Rückseite mit einer eingefärbten Haftvermittlerschicht unterschiedlicher Zusammensetzung versehen ist und welcher auf ein Substrat, bestehend aus Polyolefinen, laminiert wird. Der mehrschichtige Verbundkörper wird durch Lamination hergestellt.

US 2004/023037 A1 zeigt einen mehrschichtigen Verbundkörper, bei dem eine Haftvermittlerschicht, bestehend aus einem gegrafteten Polymer auf Basis eines Polyolefins, welches mit Methyl(meth)acrylat polymerisiert wird, auf eine Schicht, bestehend aus Acrylpolymer, Polyolefinen oder Fluorpolymeren, appliziert wird. Diese zweite Schicht kann auch symmetrisch angebracht sein, sodass sich ein Aufbau: Acrylpolymer - gegraftetes Polymer (Haftvermittler) - Polyolefin ergeben kann.

Die US 2008/0220274 A1 beschreibt einen Acrylfilm zur Verwendung auf einem thermoplastischen Olefinsubstrat, wobei als Haftvermittlerschicht Polymere auf Basis funktionalisierter Acryl-Olefincopolymere verwendet werden. Als Basis für die funktionalisierten Acryl-Olefincopolymere werden Ethylen oder Propylen aber auch Alkylacrylate genannt. Die Funktionalisierung erfolgt mittels organischer Säureanhydride oder ungesättigter Epoxide. Die drei Schichten können coextrudiert, gegebenenfalls auch laminiert werden.

Die Polymere in den drei eingangs genannten Dokumenten, die sich mit Schichtaufbauten aus Styrolpolymeren (insbesondere ABS) und Acrylaten (insbesondere PMMA) beschäftigen, sind als Legierungen miteinander verträglich. Dies bedeutet, dass die mechanischen Eigenschaften durch die Verwendung von Regenerat, Regranulat, Recyklat oder Mahlgut als Zusatz in der Substratschicht je nach Quantität des Zusatzes nicht oder nur in geringem Umfang beeinträchtigt werden. Alle der anschließend genannten Dokumente, die sich mit Polyolefin/Acrylataufbauten beschäftigen, beschreiben Verbundkörper mit Schichten aus unverträglichen Polymeren. In diesen Dokumenten wird primär beschrieben, wie Polyacrylate auf Polyolefinen zum Haften gebracht werden können. Aufgrund der Unverträglichkeit von Polyolefinen und Polyacrylaten kann daher beim Stand der Technik Regenerat, Regranulat, Recyklat oder Mahlgut im beschriebenen Schichtaufbau nicht verwendet werden. Sehr häufig muss bei der Herstellung solcher Verbundkörper Regenerat, Regranulat, Recyklat oder Mahlgut, welches aus hochwertigen Rohstoffen besteht, entsorgt oder für minderwertige Produkte eingesetzt werden. Insgesamt verteuert dies die Herstellung von mehrschichtigen Verbundkörpern auf Basis eines Coextrudates aus Polyolefinen und Polyacrylaten.

Aufgabenstellung für die vorliegende Erfindung war es daher, einen flächigen, colorierten mehrschichtigen Verbundkörper auf Basis eines Coextrudates aus Polyolefinen und Polyacrylaten zu entwickeln, welcher bei Zusatz von anfallendem Regenerat, Regranulat, Recyklat und/oder Mahlgut annähernd gleichbleibend gute mechanische Eigenschaften erreicht und damit sowohl die geforderten technischen als auch die kommerziellen Anforderungen erfüllt.

Die Aufgabe wird durch einen mehrschichtigen, coextrudierten Verbundkörper gelöst, der den folgenden Schichtaufbau in der genannten Reihenfolge aufweist:
(i) optional eine, vorzugsweise transparente, Deckschicht (1), umfassend thermoplastische Acrylpolymere,
(ii) eine zweite Schicht (2), umfassend thermoplastische Acrylpolymere und vorzugsweise Farbmittel,
(iii) eine Haftvermittlerschicht (3), umfassend einen thermoplastischen Werkstoff, welche die zweite Schicht (2) mit der darunter liegenden vierten Schicht (4) haftend verbindet,
(iv) eine vierte Schicht (4), mit einer Schichtstärke (s4) von 1 - 50%, vorzugsweise 1 - 30 %, bezogen auf die Dicke (d) des Verbundkörpers, umfassend einen thermoplastischen polyolefinbasierenden Werkstoff,
(v) eine Substratschicht (5), umfassend 1 - 100 Gew.%, bevorzugt 10 - 100 Gew.%, anfallender Abfall sowie
(vi) eine sechste Schicht (6), umfassend einen thermoplastischen polyolefinbasierenden Werkstoff mit einer Schichtstärke (s6) von 1 - 50%, vorzugsweise 1 - 30 %, bezogen auf die Dicke (d) des Verbundkörpers.

Die Erfindung beruht auf der überraschenden Erkenntnis, dass Verbundkörper mit diesem Schichtaufbau - obwohl sie Mischungen aus an sich unverträglichen Kunststoffen in der Substratschicht aufweisen - dennoch fast dieselben mechanischen Eigenschaften zeigen, wie wenn die Schichten jeweils nur mit verträglichen Kunststoffen aufgebaut wären. Die zuvor genannten Schichten grenzen in der genannten Reihenfolge unmittelbar aneinander an, d.h. es sind keine weiteren Zwischenschichten vorhanden.

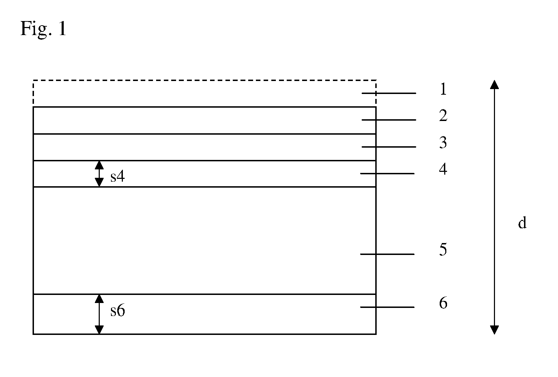

Ein erfindungsgemäßer Verbundkörper ist in Fig. 1 dargestellt.

Der Schichtaufbau ist wie folgt: Die optionale Deckschicht 1 (daher strichliert dargestellt) besteht im Wesentlichen aus einem thermoplastischen Acrylpolymer wie PMMA, HI-PMMA oder einer Mischung daraus. Darunter befindet sich die zweite Schicht 2, welche ebenfalls im Wesentlichen aus PMMA, HI-PMMA oder einer Mischung der beiden besteht. Zusätzlich sind in der zweiten Schicht 2 noch Farbmittel, beispielsweise Effektpigmente und gegebenenfalls UV-Additive vorhanden. Unterhalb der zweiten Schicht 2 ist die Haftvermittlerschicht 3 angeordnet, welche - wie an sich bekannt - eine Haftvermittlung zwischen PMMA und Polyolefin darstellt. Unterhalb der Haftvermittlerschicht 3 befindet sich die vierte Schicht 4, die aus thermoplastischem Polyolefin (z.B. PP) und Farbmittel (beispielsweise Farbstoffen) besteht. Die Schichtstärke s4 der vierten Schicht 4 beträgt bevorzugt zwischen 1 und 30 % bezogen auf die Gesamtdicke d des Verbundkörpers.

Unterhalb der vierten Schicht 4 befindet sich die Substratschicht 5, die zwischen 1 und 100 Gew. %, vorzugsweise zwischen 10 und 100 Gew. %, an anfallendem Abfall aus dem Herstellungsverfahren enthält. Der anfallende Abfall kann sich aus einer Mischung aller Komponenten der einzelnen Schichten zusammensetzen. Der auf 100 Gew. % fehlende Rest setzt sich aus thermoplastischen polyolefinbasierten Werkstoff, sowie gegebenenfalls Additiven und Farbmitteln zusammen. Unterhalb der Substratschicht 5 befindet sich die sechste Schicht 6, umfassend einen thermoplastischen polyolefinbasierten Werkstoff, der gegebenenfalls noch Farbmittel und diverse Additive und Modifier enthalten kann. Die Schichtstärke s6 der sechsten Schicht 6 beträgt vorzugsweise etwa 1 bis 30% bezogen auf die Gesamtstärke d des Verbundkörpers.

### Werkstoffliches Kunststoff-Recycling

Die wichtigsten Begriffsdefinitionen bei der stofflichen Wiederverwertung von Kunststoffen seien zitiert. Die folgenden Definitionen wurden dem Buch "Werkstoff-Führer Kunststoffe: Eigenschaften, Prüfungen, Kennwerte" - HANSER Verlag, 10. Auflage, S. 51 entnommen:
1. *Recyklat* ist ein Überbegriff; es handelt sich um eine Formmasse bzw. einen aufbereiteten Kunststoff mit definierten Eigenschaften. In vielen Fällen wird das Recyklat mit Neuware abgemischt. Ein Recyklat hat in seinem Werdegang im Allgemeinen bereits einen Verarbeitungsprozess hinter sich. Ein Masterbatch oder ein Blend, die aus mehreren Kunststoffen durch Aufbereiten, also durch einen Verarbeitungsprozess hergestellt wurden, gelten nicht als Rezyklate.
2. *Mahlgut* wird durch Mahlen von Kunststoff gewonnen. Mahlgut hat unterschiedliche und unregelmäßige Teilchengrößen von 2 mm bis 5 mm und kann Staubanteile enthalten.
3. *Regranulat* wird aus Mahlgut über einen Schmelzprozess als Granulat gewonnen. Regranulat hat gleichmäßige Korngröße und keinen Staubanteil und ist problemlos verarbeitbar.
4. *Regenerat* wird über einen Schmelzprozess (Compoundieren) unter Zugabe von Zusätzen (Additiven) zur Eigenschaftsverbesserung gewonnen. Regenerat hat gleichmäßige Korngröße und keinen Staubanteil und ggf. definierte Eigenschaftswerte.

Weitere wichtige Begriffe beim Recycling sind die *Reinheit* und *Verträglichkeit* der Ausgangsmaterialien gewidmet:
- *Typenrein* bedeutet, dass nur ein Kunststoff eines Rohstoffherstellers mit derselben Typbezeichnung aufgearbeitet wird.
- *Sortenrein* bedeutet, dass Kunststoffe mit gleicher Kennzeichnung nach DIN EN ISO 11469 bzw. VDA 260, ggf. verschiedener Rohstoffhersteller aufbereitet werden.
- *Sortenähnlich* bedeutet, dass die aufzubereitenden Kunststoffe zwar in ihren Grundpolymeren übereinstimmen, aber in besonderen Eigenschaften, z.B. flammhemmende Zusätze voneinander abweichen.
- *Vermischt* bedeutet, dass unterschiedliche Kunststoffe mit chemischer Verträglichkeit aufbereitet werden (ABS und PC). Kunststoffe sind dann verträglich, wenn sie in der Schmelze untereinander mischbar sind und zu einem Formstoff mit befriedigenden mechanischen Eigenschaften und akzeptierbarer Oberfläche verarbeitet werden können.
- *Verunreinigt* bedeutet, dass die aufzubereitenden Kunststoffe aus dem vorausgegangenen Gebrauch noch Stoffe enthalten, die die Eigenschaften eines daraus herzustellenden Formteils beeinträchtigen.
- *Anfallender Abfall:* Dieser Begriff ist in der Literatur nicht definiert, in dem erfindungsgemäßen Sinne versteht man der Einfachheit halber unter anfallendem Abfall einen Überbegriff der die oben definierten Begriffe Recyklat, Mahlgut, Regranulat und Regenerat sowie den Unterbegriffen über die Reinheit und Verträglichkeit in sich vereint.

Die Sinnhaftigkeit des werkstofflichen Kunststoff-Recycling erklärt sich im erfindungsgemäßem Fall wie folgt: Beim Einfahren und Einstellen der Coextrusionsanlage müssen unterschiedliche Parameter wie zum Beispiel die Gesamtdicke, die vorgegebenen Dicken der einzelnen Schichten, die Breite, die homogene Dicke der einzelnen Schichten über die Breite und die vom Kunden vorgegebene Farbe so adaptiert und eingestellt werden, dass sie dem vorgegebenen Aufbau bzw. den Anforderungen entsprechen. Derselbe Vorgang muss gewählt werden, wenn sich gemäß dem Kundenwunsch die Gesamtdicke, Breite oder die Farbe verändert. Auch erfolgt der Zuschnitt zum vorgegebenen Format (Länge und Breite) *in-Line* was bedeutet, dass die Überstände abgeschnitten werden und als Abfall anfallen ("anfallender Abfall"). Während dieser Ein- oder Umstellvorgänge wird Material gefertigt, welches zwar die Zusammensetzung des Endproduktes aufweist, das aber gemäß dem Stand der Technik nicht mehr dem Prozess zugeführt wird. Setzt man den anfallenden Abfall nicht dem Prozess zu, so hat dies negativen Einfluss auf den kommerziellen Erfolg des Produktes: Der anfallende Abfall muss zwar mit einkalkuliert werden, da der Rohstoffverbrauch de facto auftritt, der Kunde muss also den gesamten Materialeinsatz bezahlen, erhält aber nur einen Teil des Materials (den Teil der zu auftragsgemäßen Halbzeugen verarbeitet wurde). Der Rest, nämlich der anfallende Abfall, ist für ihn aber unbrauchbar. Zusätzlich ergibt sich ein ökologischer Aspekt, dieser anfallende Abfall muss entsorgt werden, da dieses Material in der Regel nicht verkauft werden kann.

Die an sich naheliegende Lösung wäre den anfallenden Abfall zu shreddern, um daraus Mahlgut herzustellen welches dem Mehrschichtverbund wieder zugesetzt wird, dies zum Beispiel in der Substratschicht. Daraus ergibt sich allerdings auf Grund der Materialunverträglichkeit von Polyolefinen und TPO mit PMMA ein Abfall der mechanischen Eigenschaften, wie Tabelle 1 zeigt, wodurch die Vorzüge der Materialkombination und die ursprüngliche Intention in der Verwendung von TPO verloren gehen.

Vermischte Mahlgüter (zum Beispiel aus der Coextrusion von Acrylnitril- Butadien- Styrol Terpolymer (ABS) mit Acrylnitril- Styrol- Acrylester Terpolymeren (ASA)), welche durch das Einfahren der Extrusionsanlage, durch Format- oder Farbwechsel oder durch das Spülen der Anlage entsteht, können bei Coextrudaten, in welchen artgleiche oder verträgliche Thermoplaste miteinander kombiniert werden wieder in die Substratschicht zugeführt werden. Es treten in diesem Fall je nach Quantität des eingesetzten Regenerates keine bis geringfügige Einbußen in den mechanischen Eigenschaften der Halbzeuge auf.

Im gegenständlichen Fall der Coextrusion von Polyolefinen mit Polymethylmethacrylat erhält man durch das Shreddern der beim Einfahren der Extrusionsanlage, durch Format- oder Farbwechsel oder durch das Spülen der Anlage entstehenden Coextrusionsabfälle gemäß o. a. Definition verunreinigtes Mahlgut. Verunreinigt aus dem Grunde, da PMMA die Eigenschaften von Polyolefinen aufgrund ihrer gegenseitigen Unverträglichkeit negativ beeinträchtigt. Dies ist anhand der Tabelle 1 verdeutlicht, welche zeigt, in welchem Ausmaß die mechanischen Eigenschaften von Polyolefinen in Mischungen mit PMMA abnehmen:

**Tabelle 1: Mechanisches Verhalten von PP in Abmischungen mit Polymethylmethacrylat. (Prozentueller Abfall zum Ausgangswert)**

| Zusammensetzung in | 100% PP⁴⁾ | 90% PP⁴⁾ + | 80% PP⁴⁾ + |
|---|---|---|---|
| Gew. % | | 10% PMMA⁵⁾ | 20% PMMA⁵⁾ |
| Gesamtenergie¹⁾ | 38,9 | 2,5 (- 93,6%) | 1,5 (- 96,1%) |
| Kerbschlagzähigkeit²⁾ | 11,5 | 6,0 (- 47,8%) | 3,9 (- 66,1%) |
| Bruchdehnung³⁾ | 248 | 24 (- 90,3%) | 4,4 (- 98,2%) |

| | | | |
|---|---|---|---|
| ¹⁾ Gemessen nach ÖNORM EN ISO 6603-2, Ausgabe 2002-04-01: Kunststoffe- Bestimmung des Durchstoßverhaltens von festen Kunststoffen, Teil 2: instrumentierter Schlagversuch (ISO 6603-2:2000), [ ]= Joule, gemessen bei Raumtemperatur, spritzgegossene Prüfkörper in Stärke 2,2 mm. ²⁾ Gemessen nach ISO DIN EN 179- 1eA "Kunststoffe- Bestimmung der Charpy Schlageigenschaften" Teil 1: Nicht instrumentierte Schlageigenschaften, Ausgabe November 2010, [ ]= kJ/m², gemessen bei Raumtemperatur ³⁾ Bruchdehnung nach ISO DIN EN 527-2 "Bestimmung der Zugeigenschaften", Ausgabe Juli 1996, [ ]= %, Messung bei Raumtemperatur ⁴⁾ PP (Polypropylen) BC240TF der Fa. BOREALIS ⁵⁾ PMMA (Polymethylmethacrylat) Plex 7M der Fa. RÖHM | | | |

In der nachfolgenden Tabelle 2 sind für Vergleichszwecke Untersuchungsresultate, welche den Zusammenhang im mechanischen Verhalten von ABS in Abmischungen mit PMMA zeigt. Demzufolge ergeben sich bei der Herstellung von Blends aus Materialien mit guter Verträglichkeit Werkstoffe mit guten mechanischen Eigenschaften, sodass bei der Verwendung von Regenerat, Regranulat, Recyklat oder Mahlgut nur mit geringfügigen Einbußen in den mechanischen Eigenschaften gerechnet werden muss.

**Tabelle 2: Mechanisches Verhalten von Acrylnitril-Butadien-Styrol Terpolymer in Abmischungen mit Polymethylmethacrylat. (Prozentueller Abfall zum Ausgangswert; Zusammensetzung in Gew. %)**

| Zusammensetzung | 100% ABS⁴⁾ | 90% ABS⁴⁾ | 80% ABS⁴⁾ |
|---|---|---|---|
| | | + 10% HI-PMMA⁵⁾ | +20% HI-PMMA⁵⁾ |
| Gesamtenergie¹⁾ | 42,8 | 44,6 (+4,2%) | 34,2 (-25,1%) |
| Kerbschlagzähigkeit²⁾ | 32,7 | 21,4 (- 34,5%) | 15,9 (- 51,4%) |
| Bruchdehnung³⁾ | 113 | 89 (- 21,2%) | 82 (- 27,4%) |

| | | | |
|---|---|---|---|
| ¹⁾ Gemessen nach ÖNORM EN ISO 6603-2, Ausgabe 2002-04-01: Kunststoffe- Bestimmung des Durchstoßverhaltens von festen Kunststoffen, Teil 2: instrumentierter Schlagversuch (ISO 6603-2:2000), [ ]= Joule, gemessen bei Raumtemperatur, spritzgegossene Prüfkörper in Stärke 2,2 mm. ²⁾ Gemessen nach ISO DIN EN 179- 1eA " Kunststoffe- Bestimmung der Charpy Schlageigenschaften" Teil 1: Nicht instrumentierte Schlageigenschaften, Ausgabe November 2010), [ ]= kJ/m², gemessen bei Raumtemperatur ³⁾ Bruchdehnung nach ISO DIN EN 527-2 "Bestimmung der Zugeigenschaften", Ausgabe Juli 1996), [ ]= %, Messung bei Raumtemperatur ⁴⁾ ABS (Acrylnitril-Butadien-Styrol Terpolymer) Magnum 3904 der Fa. STYRON ⁵⁾ HI-PMMA (impact modifiziertes Polymethylmethacrylat) Altuglas MI7T der Fa. ARKEMA | | | |

Die Gegenüberstellung der beiden Tabellen zeigt deutlich auf, dass die Verwendung von anfallendem Abfall bei verträglichen Kunststoffen kein Problem darstellt, während sie bei unverträglichen Kunststoffen praktisch zur Unbrauchbarkeit des Produkts führt.

Eine weitere Quelle von anfallendem Abfall ergibt sich auch aus den Folgeprozessen Tiefziehen und Besäumen: Tiefgezogene Bauteile aus mehrschichtigen Halbzeugen, werden nach dem Tiefziehen besäumt: Es werden die dreidimensionalen Teile gemäß ihrer vorgesehenen Geometrie zugeschnitten. Diese Abschnitte werden mittels Shredder eingemahlen und ergeben bei erfindungsgemäßen Mehrschichtverbunden wiederum verunreinigtes Mahlgut, welches auf Kundenwunsch auch wieder dem erfindungsgemäßen mehrschichtigen, coextrudierten Verbundkörpern zugesetzt wird.

Weiters ist es auch möglich dieses verunreinigte Mahlgut einem Aufbereitungsschritt zuzuführen und damit verunreinigtes Regranulat zu erzeugen, welches als solches auch in der Substratschicht (5) des erfindungsgemäßen Aufbaues verwendet werden kann.

Ebenfalls ist es möglich, das verunreinigte Mahlgut mit Verträglichkeitsvermittlern zu versetzen, um die Kompatibilität der Werkstoffe der Deckschicht (1) und der eingefärbten zweiten Schicht (2) mit den Werkstoffen der Schichten (3), (4), (5) und (6) zu verbessern. Als Beispiele für Verträglichkeitsvermittler können Alken-Alkylacrylat-copolymere (wie z. B. Ethylen-Ethylacrylatcopolymer EEA) sowie Modifikationen (z. B. Maleinsäureanhydrid gegraftete Ethylen- Ethylacrylatcopolymer), gegraftete Polymere und Copolymere (wie z. B. Maleinsäuregegraftetes Polyethylen) oder Copolymere auf Basis von Ethylen-Vinylacetat (EVA) verwendet werden.

Erfindungsgemäß ist auch die Verwendung von schlagzähmodifizierenden Additiven in anfallendem Abfall vorgesehen, wodurch sich auch die mechanischen Eigenschaften verbessern lassen. Mischungen dieser Art können auch in der Substratschicht (5) verwendet werden.

### Herstellverfahren

Erfindungsgemäße Verbundkörper werden bevorzugt im Coextrusionsverfahren hergestellt. Dieses ist dadurch gekennzeichnet, dass es artgleiche oder fremdartige Kunststoffschmelzen vor dem Verlassen einer Austrittsdüse zusammenführt. Für den erfindungsgemäßen Aufbau werden die Schmelzen der Schichten (1), (2), (3), (4), (5) und (6) über einen Adapter oder in einer Mehrkanaldüse oder einer Kombination von beidem zusammengeführt und durch die Düse ausgestoßen, über einen Glättkalander geleitet und gekühlt. Die Kühlung erfolgt in der Regel dadurch, dass die Halbzeuge über eine Kühlbahn geleitet werden nach der sie in der Breite zugeschnitten werden. Der Längsbeschnitt erfolgt vor dem Abstapeln.

### Verarbeitung der Halbzeuge

Bauteile aus Verbundkörpern, wie sie oben und auch in den beiliegenden Ansprüchen definiert sind, können aus den flächigen Verbundkörpern (Halbzeugen) durch thermisches Verformen (Thermoformen) erzeugt werden. Dabei werden die Verbundkörper in einer Tiefziehmaschine über den Erweichungspunkt erhitzt und unmittelbar darauffolgend über eine temperierte Form gezogen. Durch Anlegen von Vakuum in den Luftraum, der sich zwischen thermoplastischem Halbzeug und der temperierten Form befindet, wird das Halbzeug an die Form gepresst, abgekühlt und anschließend entformt. Im Anschluss wird der Formrohling auf das richtige Maß besäumt, wodurch man einen dreidimensionalen Bauteil mit einer definierten, sehr gut reproduzierbaren Geometrie erhält.

### Optionale Deckschicht (1)

Die optionale Deckschicht (1) umfasst ein Acrylpolymer oder -copolymer, im bevorzugten Fall Polymethylmethacrylat (PMMA), impact modifiziertes PMMA (HI-PMMA) oder ein Blend daraus. Optional kann die Deckschicht (1) UV-Additive im Ausmaß von jeweils 0,01 bis 8 Gew. % aufweisen. Dadurch werden die in der eingefärbten Schicht (2) eingesetzten Werkstoffe und Farbmittel vor UV-Einstrahlung zusätzlich geschützt, wodurch die Farbstabilität über die Verwendungsdauer bei Bestrahlung mit UV-Licht deutlich verbessert wird. Die wichtigsten Eigenschaften von PMMA sind in Hans Domininghaus, "Die Kunststoffe und ihre Eigenschaften", Ausgabe 1998, S 455 - 481 zusammengefasst. PMMA als Werkstoff für die Deckschicht gewährleistet neben der sehr guten UV- Beständigkeit auch eine sehr gute Kratz- und Chemikalienbeständigkeit sowie hohen Oberflächenglanz. Bevorzugt weist die Deckschicht 1 neben Acry(co)polymeren (samt allfälligen Schlagzähmodifieren) und UV-Additiven keine weiteren Bestandteile auf.

Die Deckschicht kann mittels einer Schutzfolie für den Transport, die Lagerung und für den Verformungsprozess versehen werden. Sie schützt die Acrylpolymeroberfläche während der Handhabung vor mechanischer Beschädigung. In der Regel wird diese erst nach der Endmontage des Bauteils abgezogen.

### Eingefärbte zweite Schicht (2)

Die eingefärbte zweite Schicht (2) umfasst ein Acrylpolymer oder -copolymer, im bevorzugten Fall Polymethylmethacrylat (PMMA), impact modifiziertes PMMA (HI-PMMA) oder ein Blend daraus. Die Schicht ist besonders bevorzugt mit Farbmitteln eingefärbt. Optional kann die eingefärbte zweite Schicht (2) UV-Additive aufweisen, um eine höhere UV-Beständigkeit der verwendeten Farbmittel und des Verbunds zu erzielen. PMMA eignet sich als Werkstoff für diese Schicht in besonderem Maße, da es eine hohe Härte und Kratzfestigkeit zeigt und transparent ist. Durch die Verwendung von HI-PMMA, gegebenenfalls auch in Abmischung mit PMMA kann der mehrschichtige coextrudierte Verbund in den mechanischen Eigenschaften verbessert werden. Weiters können der in der eingefärbten zweiten Schicht (2) enthaltenenen Acrylpolymeren oder -copolymeren auch Additive zugesetzt werden, welche die Haftkraft zur darunter liegenden Haftvermittlerschicht (3) verbessern. Als Beispiele können Ethylen- Alkylacrylat- Copolymere oder Copolymere aus Ethylen- Alkylacrylat- Maleinsäureanhydrid genannt werden.

### Haftvermittlerschicht (3)

Haftvermittlerschichten werden häufig für die Verankerung unterschiedlicher Schichten eingesetzt, dies speziell dann, wenn die Werkstoffe der Schichten die miteinander verankert werden sollen zueinander nicht verträglich sind. In dem erfindungsgemäßen Fall sollen Polyolefine (also sehr apolare Werkstoffe) mit Polyacrylaten (also sehr polaren Werkstoffen) flächig miteinander verbunden werden. Aufgrund ihrer chemischen Struktur und der physikalisch chemischen Eigenschaften können diese Werkstoffe nicht unter Erzielen einer guten Haftung miteinander coextrudiert werden. Daher wird eine Haftvermittlerschicht (3) eingesetzt. Haftvermittler, welche Polyolefine mit Polyacrylaten verbinden, werden in unterschiedlichsten chemischen Strukturen angeboten. Der erfindungsgemäße Mehrschichtaufbau inkludiert als Haftvermittler alle Thermoplaste oder thermoplastischen Elastomere, welche mittels Coextrusion verarbeitbar sind und welche zu einer verbesserten Haftung zwischen der eingefärbten zweiten Schicht (2) und der darunter liegenden vierten Schicht (4) führen. Unter einer ausreichenden Haftung wird dabei nicht nur die Haftung zum Zeitpunkt unmittelbar nach Herstellung der Halbzeuge, sondern auch die Haftung nach den weiteren Verarbeitungsschritten und auch in der Anwendung unter den erforderlichen Bedingungen verstanden.

Als Beispiele für Werkstoffe, die zu Haftvermittlerschichten verarbeitet werden, können hier beispielhaft genannt werden: Copolymere auf Basis Alkylen- Alkylacrylaten und deren chemische Modifikationen oder Styrolcopolymere, deren Derivate und Modifikationen. Die Haftvermittlerschicht (3) kann optional mit Farbmittel eingefärbt sein, auch mit Effektpigmenten. Zur Verbesserung der UV- Stabilität kann die Schicht auch mit UV-Additiven versehen sein, wodurch sich erstens das Verhalten der Schicht per se gegenüber UV Strahlung aber auch zweitens die UV Stabilität der darunterliegenden vierten Schicht (4) verbessert.

### Vierte Schicht (4)

Die unterhalb der Haftvermittlerschicht (3) angeordnete vierte Schicht (4) besteht aus thermoplastischen polyolefinbasierenden Werkstoffen, gegebenenfalls Farbmittel, UV-Additiven und Additiven zur Haftvermittlung.

Unter thermoplastischen polyolefinbasierenden Werkstoffen im Sinne der Erfindung versteht man Polyolefine, welche eingeteilt werden in Homopolymere, Copolymere, Terpolymere oder Blends daraus. Polymere der bevorzugten Struktur können aus einem oder mehreren olefinbasierten Monomer bestehen, wie z.B.: Ethylen, Propylen oder Copolymere und können in ihrer Molekülgeometrie linear und/oder verzweigt sein. Polyolefine, speziell Polypropylene können mit Elastomeren modifiziert werden, auch Füllstoffe können zugesetzt sein. Die elastomere Phase (oder auch disperse Phase) kann im Allgemeinen aus einem Kautschuk, (z. B. EPDM= Ethylen- Propylen-Dien Kautschuk) oder aus einem Styrol-Blockcopolymer oder einer Mischung daraus bestehen. Die kontinuierliche Phase besteht aus zumindest einer Polyolefin-Komponente. Polymerblends dieser Art werden gemeinhin als polyolefinische Elastomer (TPO oder TPE-O) bezeichnet und zählen im Sinne der Erfindung auch zu thermoplastischen polyolefinbasierenden Werkstoffen. Elastomere Thermoplaste auf PP-Basis (TPO) stellen Blends mit verbesserten mechanischen Eigenschaften dar. Thermoplastische Elastomere sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen.

Der vierten Schicht 4 wird kein anfallender Abfall in der Schicht zugesetzt. Je nach Güte der mechanischen Eigenschaften des anfallenden Abfalls, welcher in der Substratschicht (5) zugesetzt wird und den Anforderungen, welche die Kunden mit Hinblick auf die mechanischen Eigenschaften an den mehrschichtigen, coextrudierten Verbundkörper stellen, bestehen die Möglichkeiten die Schichtstärke und/oder die chemische Zusammensetzung der vierten Schicht (4) zu variieren. Bei Verwendung von anfallendem Abfall mit niedrigen mechanischen Eigenschaften in der Substratschicht 5 kann so entweder die Schichtstärke angehoben werden oder impact Modifier (z. B. Kautschuk) zugesetzt werden. Die Schichtstärke (s4) der vierten Schicht (4) beträgt 1- 50%, bevorzugt 1- 30% bezogen auf die Gesamtdicke (d) des Verbundkörpers. Dieser vierten Schicht 4 können Farbmittel zugesetzt werden, auch der Zusatz von UV-Additiven ist möglich. Weiters können noch Additive zugesetzt werden, welche die Haftungseigenschaften zur darüber liegenden Haftvermittlerschicht (3) verbessern. So können der Schicht zum Beispiel Ethylen-Vinylacetat Copolymere zugesetzt werden.

### Substratschicht (5)

Erfindungsgemäß werden der Substratschicht (5) im Sinne des werkstofflichen Kunststoff-Recyclings anfallende Abfälle aus dem Coextrusionsprozeß oder den Folgeprozessen in einem Ausmaß von 1-100 Gew. %, bevorzugt 10-100 Gew. %, zugesetzt. Ist der Gehalt an Acrylpolymer oder -copolymer hoch und damit die mechanischen Eigenschaften der zugesetzten anfallenden Abfälle tief, so besteht erfindungsgemäß auch die Option den zugesetzten anfallenden Abfällen Phasenvermittler oder Schlagzähmodifikatoren zuzusetzen um die mechanischen Eigenschaften zu verbessern. Die Zusatzmenge an Additiven dieser Art richtet sich in diesem Fall nach der Größenordnung der mechanischen Eigenschaften: Je tiefer die mechanischen Eigenschaften umso höher ist die Zusatzmenge an Additiven dieser Art. Als Beispiele können Alkylacrylatcopolymere, Styrol-Ethylen-Butadien-Styrol Copolymere sowie deren chemische Modifikationen genannt werden. Auch reaktive Phasenvermittler sind denkbar mit Hilfe derer die unverträglichen Phasen der Acrylpolymer oder -copolymer und der thermoplastischen polyolefinbasierenden Werkstoffen chemisch miteinander verbunden werden. Beispielsweise können hier Alkyl- Acrylester- Maleinsäureanhydrid Terpolymere angeführt werden.

Weiters kann die Substratschicht 5 thermoplastische polyolefinbasierende Werkstoffe aufweisen (siehe obige Definition unter vierte Schicht 4). Zusätzlich können Füllstoffe oder Additive zugesetzt sein, wie z.B.: UV-Absorber und UV-Stabilisatoren, Gleitmittel, Oxidationsstabilisatoren, Flammschutzmittel, Synergisten, Farbmittel und/oder Füllstoffe. Als Füllstoffe können beispielsweise angeführt werden: Glimmer, Talkum, Calciumcarbonat, Wollastonit, Dolomit, Glasfasern, Borfasern, gegebenenfalls andere Fasern anorganischen Ursprungs, Carbonfasern und Fasern organischen Ursprungs (z. B. Flachsfasern oder Zellulosefasern). Dadurch wird das Spektrum der mechanischen Eigenschaften (Steifigkeit, Gebrauchstemperaturen etc.) deutlich erweitert. Die Füllstoffe können dabei vorbehandelt sein, um eine Verbesserung des Bindungsverhaltens zwischen dem Füllstoff und der polymeren Matrix zu verbessern. So können z.B.: Fettsäuren wie Stearinsäure, Silane, Palmitinsäure, modifizierte Polypropylene und dergleichen verwendet werden.

### Sechste Schicht (6)

Die sechste Schicht (6) besteht aus thermoplastischen polyolefinbasierenden Werkstoffen (siehe obige Definition unter vierte Schicht 4). Es wird kein anfallender Abfall in der Schicht zugesetzt. Je nach Güte der mechanischen Eigenschaften des anfallenden Abfalls welcher in der Substratschicht (5) zugesetzt wird und den Anforderungen welche die Kunden mit Hinblick auf die mechanischen Eigenschaften an den mehrschichtigen, coextrudierten Verbundkörper stellen, bestehen die Möglichkeiten einerseits die Schichtstärke und andererseits die chemische Zusammensetzung der sechsten Schicht (6) zu variieren. Bei Verwendung von anfallendem Abfall mit niedrigen mechanischen Eigenschaften kann so entweder die Schichtstärke angehoben oder Impact-Modifier (z. B. Kautschuk) zugesetzt werden. Eine Kombination aus Anheben der Schichtstärke und Zusatz an Impact-Modifier (z. B. Kautschuk) ist natürlich ebenfalls möglich. Die Schichtstärke (s6) der sechsten Schicht (6) beträgt 1-50%, bevorzugt 1-30% bezogen auf die Gesamtdicke (d) des Verbundkörpers und ist optional mit Farbmitteln versehen. Sofern der Zusatz von Additiven in dem thermoplastischen polyolefinbasierenden Werkstoff nicht zu einer matten Rückseite führt, besteht die Möglichkeit diese optional mittels geeigneter Additive zu mattieren, dies chemisch oder mechanisch.

Da thermoplastische polyolefinbasierende Werkstoffe mangelnde Haftungseigenschaften bei Verklebung oder Verstärkung (z. B. mit Glasfaser verstärkten Polyurethanen oder Polyestern) aufweisen, können der rückseitige Deckschicht (6) chemische Haftvermittler zugesetzt werden: Beispiele dafür wären Ethylen-Vinylacetat-Copolymere bei Polyethylen oder Maleinsäureanhydrid gepropfte Polypropylene bei Polypropylen. In beiden Fällen werden durch die beigefügten Comonomere die Polarität der Oberfläche erhöht, wodurch sich ein verbessertes Haftungsverhalten ergibt. Eine Oberflächenvorbehandlung durch Aktivierung ist zielführend. Dies geschieht durch Coronabehandlung, Beflämmen, Plasmabehandlung oder Fluorierung.

### UV-Additive

Der ultraviolette Anteil des Sonnenlichtes zerstört die chemischen Bindungen in Polymeren in einem Prozeß den man Photodegradation nennt. Dies bewirkt durch die chemischen Veränderungen im Polymer auch Änderungen im chemischen und physikalischen Verhalten. Bruch, Verfärbung, Farbänderungen sind z. B. Folgen dieser Reaktionen. Um Effekte dieser Art zu unterbinden oder zu verzögern, können UV-Additive zugesetzt werden. In Abhängigkeit von der Wirkungsweise dieser UV-Additive unterscheidet man in UV-Absorber und UV- Stabilisatoren. UV-Absorber führen zu einer Absorption des UV Anteils des Lichtes, welcher durch das Polymer hindurchtritt und wandeln diesen in Wärmeenergie um. Als Beispiel für sehr wirksame UV-Absorber können Benzophenone genannt werden. UV- Stabilisatoren hemmen freie Radikale, welche durch die Bestrahlung mit UV-Strahlung entstehen und stoppen die weitere Zersetzung. Als Beispiel für sehr wirksame Stabilisatoren können HALS (hindered amine light stabilizers) genannt werden.

### Farbmittel

Farbmittel ist nach DIN 55943 die Sammelbezeichnung für alle farbgebenden Stoffe. Farbmittel werden einerseits nach ihrer chemischen Struktur in anorganische und organische Farbmittel eingeteilt. In beiden Gruppen kann nach der Herkunft in natürliche und synthetische, oder nach der Farbqualität in weiße, bunte und schwarze Farbmittel, sowie in Effekt- und Leuchtfarbmittel gegliedert werden.

Anorganische Farbmittel sind fast durchweg Pigmente. Die organischen Farbmittel werden nach ihrer Löslichkeit im jeweiligen Anwendungsmedium in unlösliche Pigmente oder lösliche Farbstoffe unterteilt. Pigmente sind im Anwendungsmedium unlösliche Farbmittel während Farbstoffe im Anwendungsmedium löslich sind.

Effektpigmente, wie in der zweiten Schicht (2) verwendet, können gemäß Literatur, Gunter Buxbaum, "Industrial Inorganic Pigments", Ausgabe 1993, Seite 207- 224 in zwei große Klassen geteilt werden, die Perlglanz- und die Metalleffektpigmente. Pigmente dieser Art können verwendet werden, um spezielle visuelle Effekte zu erzielen, sie können auch in Kombination mit normalen Pigmenten und/oder Farbstoffen eingesetzt werden.

### Beispiele

Die Erfindung wird nachstehend anhand von Beispielen erläutert. Dazu wurden mit Hilfe des Coextrusionsverfahrens unterschiedliche Verbundkörper hergestellt. Zur Herstellung der Verbundkörper wurde dabei eine Anlage bestehend aus 6 Extrudern verwendet. Die Schmelzen der einzelnen Extruder wurden in einem Adaptersystem zusammengeführt, über eine Düse mit einer Austrittsbreite von 1800 mm ausgetragen und im Up- Stack Kalandrierverfahren geglättet, über eine ca. 15 Meter lange Kühlbahn geleitet und in Folge Längs- und Querbesäumt.

### Beispiel 1: Verbundkörper ohne Zusatz von anfallenden Abfall

### Gesamtstärke: 3,54 mm

| | | |
|---|---|---|
| Deckschicht (1): | Stärke 0,14 mm: | 100% HI- PMMA |
| Zweite Schicht (2): | Stärke 0,105 mm | 100% HI- PMMA + Einfärbung |
| Haftvermittlerschicht (3): | Stärke 0,071 mm | 100% Haftvermittler + Einfärbung |
| Vierte Schicht (4): | Stärke 0,35 mm | 100% TPO + Einfärbung |
| Substratschicht (5): | Stärke 2,826 mm | 100% TPO |

### Beispiel 2: Aufbau mit 100% anfallenden Abfall in der Substratschicht, keine vierte Schicht (4), keine sechste Schicht (6):

### Gesamtstärke: 3,52 mm

| | | |
|---|---|---|
| Deckschicht (1): | Stärke 0,14 mm | 100% HI- PMMA |
| Zweite Schicht (2): | Stärke 0,109 mm | 100% HI- PMMA + Einfärbung |
| Haftvermittlerschicht (3): | Stärke 0,074 mm | 100% Haftvermittler + Einfärbung |
| Substratschicht (5): | Stärke 3,182 mm | 100% anfallender Abfall |

### Beispiel 3: Aufbau mit 100% anfallenden Abfall in der Substratschicht, keine sechste Schicht (6):

### Gesamtstärke: 3,50 mm

| | | |
|---|---|---|
| Deckschicht (1): | Stärke 0,14 mm | 100% HI- PMMA |
| Zweite Schicht (2): | Stärke 0,107 mm | 100% HI- PMMA + Einfärbung |
| Haftvermittlerschicht (3): | Stärke 0,071 mm | 100% Haftvermittler + Einfärbung |
| Vierte Schicht (4): | Stärke 0,35 mm | 100% TPO + Einfärbung |
| Substratschicht (5): | Stärke 2,832 mm | 100% anfallender Abfall |

### Beispiel 4: Aufbau mit 100% anfallenden Abfall in der Substratschicht (5), mit vierter Schicht (4) und sechster Schicht (6) [erfindungsgemäßer Aufbau]: Gesamtstärke: 3,50 mm

| | | |
|---|---|---|
| Deckschicht (1): | Stärke 0,14 mm | 100% HI- PMMA |
| Zweite Schicht (2): | Stärke 0,105 mm | 100% HI- PMMA + Einfärbung |
| Haftvermittlerschicht (3): | Stärke 0,070 mm | 100% Haftvermittler + Einfärbung |
| Vierte Schicht (4): | Stärke 0,36 mm | 100% TPO + Einfärbung |
| Substratschicht (5): | Stärke 2,465 mm | 100% anfallender Abfall |
| Sechste Schicht (6): | Stärke 0,36 mm | 100% TPO + Einfärbung |

Die mechanischen Werte der beschriebenen Verbunde sind in der folgenden Tabelle 3 angeführt.

**Tabelle 3: Mechanisches Verhalten von mehrschichtigen, coextrudierten Verbundkörper auf Basis PMMA- TPO**

| | Beispiel 1 | Beispiel 2 | Beispiel 3 | Beispiel 4 |
|---|---|---|---|---|
| Gesamtenergie¹⁾ | 40,15 | 18,81 | 22,32 | 37,86 |
| Kerbschlagzähigkeit ²⁾ | 57,95 | 15,33 | 17,26 | 36,52 |
| Bruchdehnung³⁾ | 28,43 | 21,17 | 28,43 | 29,08 |

| | | | | |
|---|---|---|---|---|
| ¹⁾ Gemessen nach ÖNORM EN ISO 6603-2, Ausgabe 2002-04-01: Kunststoffe- Bestimmung des Durchstoßverhaltens von festen Kunststoffen, Teil 2: instrumentierter Schlagversuch (ISO 6603-2:2000), [ ]= Joule, gemessen bei RT, ²⁾ Gemessen nach ISO DIN EN 179- 1eA " Kunststoffe- Bestimmung der Charpy Schlageigenschaften" Teil 1: Nicht instrumentierte Schlageigenschaften, Ausgabe November 2010, [ ]= kJ/m², gemessen bei RT ³⁾ Bruchdehnung nach ISO DIN EN 527-2 "Bestimmung der Zugeigenschaften", Ausgabe Juli 1996, [ ]= %, Messung bei RT | | | | |

Wie die Beispiele zeigen, ist im Vergleich zum idealisierten Beispiel 1, welches ohne anfallenden Abfall hergestellt wurde, in den Beispielen 2 und 3 ein starker mechanischer Abfall zu beobachten, wenn nicht der erfindungsgemäße Schichtaufbau gewählt wurde. Im erfindungsgemäßen Beispiel 4 ist der Abfall in der Gesamtenergie sehr gering und in der Kerbschlagzähigkeit verhältnismäßig gering, obwohl die Substratschicht zu 100% aus anfallendem Abfall besteht, also den schlechtesten, möglichen Aufbau gemäß der Erfindung. Diese Verbesserung in den mechanischen Eigenschaften ist eine Folge des Schichtaufbaus.

## Patentansprüche

1. Verbundkörper, umfassend in der genannten Reihenfolge
(i) optional eine Deckschicht (1), umfassend thermoplastische Acrylpolymere,
(ii) eine zweite Schicht (2), umfassend thermoplastische Acrylpolymere und vorzugsweise Farbmittel,
(iii) eine Haftvermittlerschicht (3), umfassend einen thermoplastischen Werkstoff, welche die zweite Schicht (2) mit der darunter liegenden vierten Schicht (4) verbindet,
(iv) eine vierte Schicht (4), mit einer Schichtstärke (s4) von 1 - 50%, vorzugsweise 1 - 30 %, bezogen auf die Dicke (d) des Verbundkörpers, umfassend einen thermoplastischen polyolefinbasierenden Werkstoff,
(v) eine Substratschicht (5), umfassend 1 - 100 Gew.%, bevorzugt 10 - 100 Gew.%, anfallender Abfall sowie
(vi) eine sechste Schicht (6), umfassend einen thermoplastischen polyolefinbasierenden Werkstoff mit einer Schichtstärke (s6) von 1 - 50%, vorzugsweise 1 - 30 %, bezogen auf die Dicke (d) des Verbundkörpers.

2. Verbundkörper nach Anspruch 1, **dadurch gekennzeichnet, dass** das Acrylpolymer der Deckschicht (1) PMMA, HI-PMMA oder ein Blend daraus ist.

3. Verbundkörper nach Anspruch 1 oder Anspruch 2, **dadurch gekennzeichnet, dass** das Acrylpolymer der zweiten Schicht (2) PMMA, HI-PMMA oder ein Blend daraus ist.

4. Verbundkörper nach einem der Ansprüche 1 bis 3, **dadurch gekennzeichnet, dass** wenigstens eine der Schichten (3, 4, 5, 6) ausgewählt aus der Haftvermittlerschicht (3), vierten Schicht (4), Substratschicht (5) oder sechsten Schicht (6) zusätzlich Farbmittel enthält.

5. Verbundkörper nach einem der Ansprüche 1 bis 4, **dadurch gekennzeichnet, dass** die Substratschicht (5) zusätzlich thermoplastischen polyolefinen Werkstoff aufweist.

6. Verbundkörper nach einem der Ansprüche 1 bis 5, **dadurch gekennzeichnet, dass** die Substratschicht Phasenvermittler und/oder Schlagzähmodifikatoren enthält, beispielsweise Alkylacrylatcopolymere, Styrol-Ethylen-Butadien-Styrol Copolymere, Alkyl- Acrylester-Maleinsäureanhydrid Terpolymere sowie deren chemische Modifikationen.

7. Verbundkörper nach einem der Ansprüche 1 bis 6, **dadurch gekennzeichnet, dass** die Substratschicht (5) zusätzlich wenigstens einen Füllstoff aufweist.

8. Verbundkörper nach einem der Ansprüche 1 bis 7, **dadurch gekennzeichnet, dass** die zweite Schicht (2) und/oder die vierte Schicht (4) Additive zur Verbesserung der Haftung zur Haftvermittlerschicht (3) aufweist(en).

9. Verbundkörper nach einem der Ansprüche 1 bis 8, **dadurch gekennzeichnet, dass** die vierte Schicht (4) und/oder die sechste Schicht (6) Additive zur Verbesserung der mechanischen Eigenschaften aufweist(en).

10. Verbundkörper nach einem der Ansprüche 1 bis 9, **dadurch gekennzeichnet, dass** die sechste Schicht (6) chemisch und/oder physikalisch mattiert ist.

11. Verbundkörper nach einem der Ansprüche 1 bis 10, **dadurch gekennzeichnet, dass** die sechste Schicht (6) Haftvermittler, beispielsweise Ethylen-Vinylacetat-Copolymere oder Maleinsäureanhydrid gepropfte Polypropylene, aufweist.

12. Verbundkörper nach einem der Ansprüche 1 bis 11, **dadurch gekennzeichnet, dass** auf der zweiten Schicht (2) oder, falls eine Deckschicht (1) vorhanden ist, auf der Deckschicht (1) eine abziehbare Schutzfolie aufgebracht ist.

13. Verbundkörper nach einem der Ansprüche 1 bis 12, **dadurch gekennzeichnet, dass** wenigstens eine der Schichten (1, 2, 3, 4, 5, 6) UV-Additive enthält.

14. Verfahren zur Herstellung eines Verbundkörpers nach einem der Ansprüche 1 bis 13, **dadurch gekennzeichnet, dass** die Materialien für die einzelnen Schichten jeweils einem Extruder zugeführt und anschließend coextrudiert werden, wobei den Materialien für die Substratschicht (5), 1 - 100 Gew.%, vorzugsweise 10 - 100 Gew.%, anfallender Abfall zugesetzt werden.

15. Formteil enthaltend einen Verbundkörper nach einem der Ansprüche 1 bis 13.

16. Formteil nach Anspruch 15, **dadurch gekennzeichnet, dass** dieser ausgewählt ist aus der Gruppe Karosserieteile, Verkleidungsteile und dergleichen.
